# DEMANDE DE BREVET EUROPEEN

(11) **EP 0 573 336 A1**
(43) Date de publication de la demande: **08.12.1993**
(21) Numéro de dépôt: 93401365.7
(22) Date de dépôt: 28.05.1993
(51) Int. Cl.: B41J 2/36, H04N 1/40

(54) **Tête d'impression thermique avec régulation de l'apport d'énergie aux points chauffants**

(30) Priorité: 03.06.1992 FR 9206718
(71) Demandeur: AXIOHM, F-92120 Montrouge (FR)
(72) Inventeur: Patry, Bernard, F-91400 Orsay (FR)
(74) Mandataire: Robert, Jean-Pierre

(57) **Abrégé**

La tête d'impression thermique, comporte une ligne de points (9) chauffants électriquement résistants et des moyens électroniques (7) de commande de leur connexion séquentielle à une source d'alimentation (10) en courant électrique comportant pour chaque point chauffant un registre à décomptage qui est chargé avant l'impression de chaque ligne de points de la valeur correspondant à l'espace de temps pendant lequel la connexion du point chauffant (9) correspondant sera maintenue établie à partir d'une autorisation d'impression commune à tous les points. Selon l'invention, elle comporte des moyens (19) de mesure en temps réel de la résistance de chaque point chauffant, connectés à un dispositif (20) de régulation de l'énergie fournie au point correspondant.

## Description

La présente invention concerne une tête d'impression thermique dans laquelle il est possible d'ajuster la quantité d'energie fournie à chaque point chauffant.

Le principe d'une imprimante thermique réside dans l'utilisation de l'effet Joule d'un point résistif pour, soit faire virer la couleur d'un support thermiquement sensible situé au droit de ce point soit provoquer le transfert d'un colorant d'un support vers un autre support par fusion ou analogue.

La maîtrise technique des matériaux tels que l'encre et les supports thermiquement sensibles permet, en réglant la quantité d'énergie calorifique dégagée par le point d'impression, l'obtention des nuances dans l'intensité des couleurs transférées ou des nuances de gris à obtenir.

Or par fabrication, la résistance de chaque point chauffant, d'une part n'est pas égale d'un point à un autre de la ligne et d'autre part subit une dérive dans le temps. Cette incertitude qui est de l'ordre de plus ou moins 25 % autour d'une valeur moyenne ou valeur nominale, est un facteur qui ne permet pas de maîtriser avec la précision voulue l'énergie à transférer au support sensible pour obtenir la nuance souhaitée.

Une tête d'impression thermique, comporte une ligne de points chauffants électriquement résistants qui peut être une ligne de points discrèts ou une ligne de points dits "interdigités", c'est-à-dire dans laquelle il n'y a pas de séparation physique des points chauffants, ces derniers étant constitués par des tronçons d'une ligne résistive continue, définis par des conducteurs reliés à la masse et au centre desquels aboutit un conducteur pour leur connexion à une source d'alimentation.

Il existe donc un besoin non satisfait d'une imprimante thermique capable de produire des impressions nuancées en couleurs ou en gris. La présente invention a pour objet une imprimante thermique du type rappelé ci-dessus qui comporte un dispositif correcteur de la valeur ohmique de chaque point de la ligne de points chauffants afin de garantir la précision de l'impression quant à la nuance souhaitée, sans nuire à la vitesse de fonctionnement.

Selon l'invention, ce dispositif correcteur comporte des moyens de détermination en temps réel de la résistance de chaque point chauffant, au début du temps de chauffe, ces moyens coopérant avec un circuit individuel de régulation de l'énergie fournie à ce point chauffant.

La régulation de cette énergie peut s'opérer de deux manières : soit par action sur le temps de chauffe soit par action sur la tension appliquée aux bornes du point chauffant. Dans le cas où on souhaite moduler la tension appliquée au point de chauffe en fonction de sa valeur résistive, les moyens de mesure de détermination de la résistance, sont associés à un circuit de pondération de la tension appliquée aux bornes du point chauffant, par exemple un diviseur de tension.

En revanche, si on souhaite moduler le temps de chauffe en fonction de la valeur résistive du point, il faut distinguer entre une technique numérique et une technique analogique de décomptage du temps de chauffe de base.

Ainsi si les registres à décomptage sont numériques, le circuit de régulation comporte un circuit pour découper le signal de commande issu de chaque registre à décomptage en une pluralité d'impulsions de largeur égale à un temps de chauffe élémentaire et un circuit pour allonger cette largeur d'impulsion, ce circuit étant piloté par la valeur mesurée de la résistance du point de chauffe.

Dans le cas d'une technique analogique, le circuit de régulation de l'énergie est un circuit pondérateur (diviseur) de la tension enregistrée dans la mémoire analogique du registre à décomptage analogique, ce pondérateur étant piloté par les moyens de mesure de la résistance du point chauffant, et étant placé dans le registre à décomptage analogique entre cette mémoire et un circuit intégrateur qui délivre en sortie une tension variable en direction d'un circuit comparateur de cette tension à une tension de référence. Le circuit comparateur délivre un signal de pilotage des moyens de connexion du point chauffant à une source d'alimentation tant que la tension à la sortie de l'intégrateur est supérieure à une tension de référence. La tension délivrée à la sortie de l'intégrateur varie linéairement en fonction du temps. La pente de cette variation linéaire est donnée par la tension que l'intégrateur reçoit en entrée, donc celle pondérée par la valeur de la résistance du point chauffant. En conséquence, le temps pendant lequel un signal est présent à la sortie du circuit comparateur est fonction de la résistance réelle du point de chauffe.

D'autres caractéristiques et avantages ressortiront de la description donnée ci-après de deux exemples de réalisation.

Il sera fait référence aux dessins annexés dans lesquels :
- la figure 1 est le schéma d'un miroir de courant appliqué à la détection de la résistance du point chauffant,
- la figure 2 est le schéma des moyens généraux de l 'invention,
- la figure 3 est le schéma des moyens de pondération du signal de commande issus d'un registre à décomptage numérique,
- la figure 4 est le schéma d'un registre à décomptage analogique comprenant un circuit de modulation du signal de commande qu'il émet.

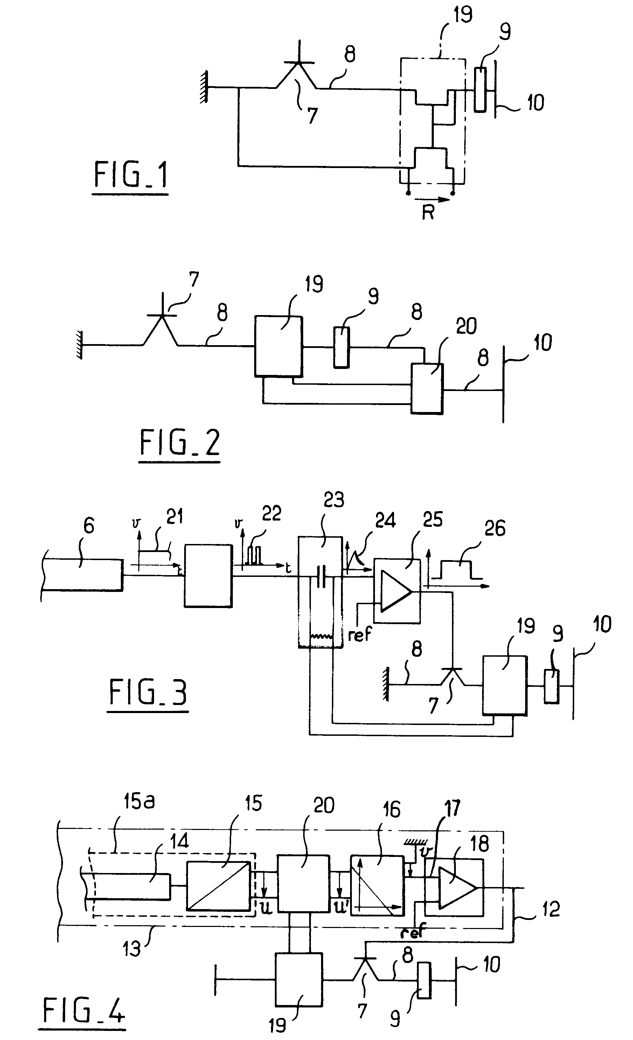

A la figure 1 on a représenté schématiquement un point chauffant 9 connecté à un commun d'alimentation 10 et à la masse par un conducteur 8 équipé d'un interrupteur commandé représenté ici sous la forme d'un transistor 7.

Comme exposé ci-dessus, la valeur de la résistance du point chauffant 9 n'est pas connue avec précision, peut être différente de la valeur du point chauffant voisin, et enfin peut varier dans le temps. Il est donc nécessaire d'assurer une régulation de l'énergie à apporter au point chauffant. Selon l'invention cette régulation est assurée en mesurant en temps réel la valeur de cette résistance. Pour ce faire, on utilise un dispositif connu au moyen duquel on obtient une image de la valeur de la résistance du point. On applique le principe du miroir de courant au moyen d'un circuit 19 pour engendrer une résistance-image qui sera la copie, à un coefficient de proportionnalité près, de la résistance R du point chauffant 9. Ce circuit 19 est par exemple un transistor MOS et la résistance-image est la résistance drain-source de ce transistor noté R sur la figure 1. Dans la pratique, on utilisera comme résistance-image celle drain-source du transistor 7 qui est également un transistor MOS. La valeur de cette résistance-image est ensuite utilisée pour agir soit sur le temps de chauffe soit sur la tension appliquée aux bornes du point chauffant de manière à définir la quantité d'énergie qui doit être apportée au point chauffant compte tenu de la valeur de sa résistance.

L'invention propose plusieurs circuits pour parvenir à ce résultat.

L'un d'eux illustré par la figure 2, consiste à intercaler entre le commun d'alimentation et le point chauffant 9 un circuit 20 pondérateur de la tension d'alimentation (par exemple un diviseur ou un multiplicateur), piloté par le dispositif 19 générateur de la résistance image.

Le pilotage du transistor 7 est assuré pendant un espace de temps correspondant à la valeur décomptée dans un registre à décomptage, de manière connue, cette valeur étant été calculée pour la nuance à obtenir en fonction d'une valeur nominale de la résistance 9. Dans le pondérateur 20 de la tension à appliquer au point chauffant 9, cette valeur nominale est intégrée de sorte qu'en y rapportant la valeur réelle de la résistance du point chauffant 9, on crée le coefficient pondérateur que le dispositif 20 applique à la tension délivrée aux bornes de ce point chauffant. On notera d'ailleurs que comme l'énergie varie avec le carré de cette tension, le coefficient pondérateur variera comme la racine de la différence entre la valeur réelle de la résistance et sa valeur nominale.

Les figures 3 et 4 illustrent, par des schémas, des circuits de régulation de l'énergie apportée au point chauffant 9 qui agissent sur le temps de chauffe plutôt que sur la tension aux bornes de ce point.

Le registre numérique à décomptage 6 commande l'émission d'un signal continu tant que la valeur qu'il contient n'a pas atteint zéro. Ce signal continu est destiné à piloter le transistor 7 et lui serait appliqué directement en l'absence de dispositif de compensation lié à la valeur de la résistance du point 9. Pour assurer cette compensation, on procède grâce à un circuit approprié à la découpe de ce signal continu 21 en une pluralité d'impulsions dont la largeur correspond à un temps de chauffe élémentaire tel que la somme de ces impulsions correspond au temps de chauffe d'un point ayant une résistance égale à la résistance nominale. Cette somme des impulsions est cependant inférieure à l'espace de temps pendant lequel le signal continu 21 serait présent lors du décomptage. Le principe appliqué ensuite consiste à régler la largeur de ces impulsions élémentaires pour tenir compte de la valeur réelle de la résistance du point chauffant 9 par rapport à sa valeur nominale. Le réglage de cette largeur passe par un circuit RC 23 dans lequel R correspond à la valeur réelle de la résistance du point chauffant et C étant un élément capacitif déterminé. Ce circuit recevant une impulsion 22, la transforme en un signal charge - décharge 24. Un comparateur 25 compare ce signal 24 à une valeur de référence et émet une impulsion 26 dont la largeur est fonction du temps pendant lequel le signal 24 est supérieur à la valeur de référence. On comprend que ce temps est fonction du couple RC, donc de la résistance réelle du point chauffant 9 élaborée par le dispositif 19. L'impulsion 26 est une impulsion pendant laquelle le transistor 7 est passant. La succession des impulsions 26 correspondant à la succession des impulsions 22, rend le transistor 7 passant pendant un temps modulé par rapport au temps pendant lequel il aurait été rendu passant sous l'effet direct de la succession des impulsions 22. On a donc obtenu une régulation de l'apport d'énergie au point chauffant 9 en jouant sur le temps de passage du courant au travers de ce point chauffant à partir, bien entendu, d'un temps de passage nominal pour une valeur résistive nominale de ce point chauffant qui détermine la largeur par exemple des impulsions 22.

A la figure 4, on a représenté un circuit qui permet d'obtenir le même résultat, à savoir le réglage du temps pendant lequel le transistor 7 est rendu passant, dans une technique analogique. Sur cette figure 4 on retrouve certains des éléments déjà décrits, à savoir un transistor 7 (qui symbolise d'ailleurs tout autre moyen électronique équivalent), le conducteur 8 reliant un point chauffant 9 d'une part au transistor 7 et d'autre part au conducteur commun d'alimentation 10. Le signal de pilotage du transistor 7 aboutit à ce dernier par un conducteur 12 et est issu d'un générateur de ce signal de pilotage qui est commandé par un registre à décomptage analogique 13. Dans l'exemple de réalisation représenté à la figure 4, ce registre comporte, intégré dans une même puce, soit un registre numérique 14 qui contient la valeur correspondant à la nuance désirée au point 9, cette valeur numérique étant délivrée à un convertisseur 15 numérique/ analogique délivrant en sortie une tension U correspondant à cette valeur numérique 14, soit une mémoire analogique 15a qui délivre directement cette tension de valeur U. Cette tension U est conduite à un intégrateur 16 qui présente à sa sortie 17 une tension v qui décroît linéairement avec le temps. La pente de cette décroissance est donnée par la tension U. Ainsi plus la tension U est importante, plus la décroissance est brutale et la tension v atteint plus rapidement une valeur de référence "ref" inférieure déterminée, proche de O volts par exemple, cette valeur de référence étant introduite dans un comparateur 18 en même temps que la tension v. Le comparateur 18 émettra en sortie un signal sur le conducteur 12 tant que la tension v sera supérieure à la valeur de référence.

On constatera que selon l'invention, on agit par le biais d'un pondérateur tel que celui 20 de la figure 2 sur la tension de sortie 21 de la mémoire analogique 14,15,15a, avant son entrée dans l'intégrateur 16. On influence donc la pente de la fonction linéaire décroissante de la tension de sortie de l'intégrateur 16 donc le temps de présence d'un signal en sortie du comparateur 18, et ce, sous l'influence de la résistance réelle du point chauffant.

Bien entendu, et comme dans les cas précédents, la régulation de ce temps s'effectue autour d'un temps correspondant d'une part à la valeur nominale de la résistance 9 et d'autre part à l'intensité de couleur désirée et commandée par le microprocesseur de gestion générale de l'impression.

## Revendications

1. Tête d'impression thermique, comportant une ligne de points (9) chauffants électriquement résistants et des moyens électroniques (7) de commande de leur connexion séquentielle à une source d'alimentation (10) en courant électrique comportant pour chaque point chauffant un registre (6) à décomptage qui est chargé avant l'impression de chaque ligne de points de la valeur correspondant à l'espace de temps pendant lequel la connexion du point chauffant (9) correspondant sera maintenue établie à partir d'une autorisation d'impression commune à tous les points, caractérisée en ce qu'elle comporte pour chaque point chauffant de la ligne (9) des moyens (19) de détermination en temps réel de sa résistance, coopérant avec un circuit (20) individuel de régulation de l'énergie fournie à ce point.

2. Tête d'impression selon la revendication 1, caractérisée en ce que le circuit (20) de régulation de l'énergie fournie au point résistant (9) est un pondérateur (20) de tension disposé sur la ligne (8) d'alimentation de ce point, et piloté par les moyens (19) de détermination de la résistance du point.

3. Tête d'impression selon la revendication 1, dans laquelle le registre à décomptage est numérique, caractérisée en ce que le circuit de régulation de l'énergie fournie au point résistant (9) comporte un dispositif de commande par une pluralité d'impulsions de la fermeture du moyen (7) de connexion du point chauffant (9) à la source d'alimentation, le nombre d'impulsions étant fonction de la valeur présente dans le registre (6) à décomptage associé au point (9) chauffant en cause, et des moyens (23,25) de réglage de la largeur de chaque impulsion (26) en fonction de la valeur de la résistance du point chauffant (9).

4. Tête d'impression selon la revendication 1 dans laquelle le registre à décomptage est analogique, caractérisée en ce que le circuit de régulation de l'énergie fournie au point chauffant (9) est un pondérateur (20) de tension piloté par les moyens de détermination (19) de la résistance du point chauffant, ce pondérateur étant placé dans le registre à décomptage analogique (13) entre un organe mémoire (14,15, 15a) contenant la valeur de tension dictée par la commande d'impression et un circuit intégrateur (16) suivi d'un comparateur (18), tous éléments compris dans le registre (13) à décomptage analogique.
